(19) Europäisches Patentamt
European Patent Office
Office européen des brevets

(11) **EP 3 076 271 A1**

(12) **EUROPEAN PATENT APPLICATION**

(43) Date of publication:
05.10.2016 Bulletin 2016/40

(51) Int Cl.:
**G06F 3/03** (2006.01)          **G06F 3/01** (2006.01)
**G06T 7/20** (2006.01)

(21) Application number: 16163256.7

(22) Date of filing: 31.03.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 31.03.2015  CN 201510149384

(71) Applicant: **Le Shi Zhi Xin Electronic Technology
(Tianjin) Limited
Beijing 100025 (CN)**

(72) Inventors:
• **HU, Xuelian**
  **100025 Beijing (CN)**
• **ZHOU, Lulu**
  **100025 Beijing (CN)**

(74) Representative: **Loock, Jan Pieter et al
Kutzenberger Wolff & Partner
Theodor-Heuss-Ring 23
50668 Köln (DE)**

(54) **OPERATION EVENT IDENTIFICATION METHOD AND DEVICE AND SMART TERMINAL**

(57)     The present disclosure provides an operation event identification method and device and a smart terminal. The method includes: obtaining position information of a start sampling point and an end sampling point of a movement of a target object in the space; obtaining correction position information of the end sampling point according to a projection point of the end sampling point on a connecting line of the start sampling point and a coordinate center; and identifying an operation event of the target object according to the position information of the start sampling point and the correction position information of the end sampling point.

Fig. 1

## Description

## CROSS-REFERENCE TO RELATED APPLICATIONS

The present disclosure is based upon and claims priority to Chinese Patent Application No. 201510149384.8, filed on March 31, 2015, the entire contents of which are incorporated herein by reference.

## FIELD OF TECHNOLOGY

The present disclosure relates to the technical field of somatosensory manipulation, and in particular, to an operation event identification method and device and a smart television including the above body movement identification device.

## BACKGROUND

Somatosensory manipulation is a technique capable of interacting with a peripheral device or an environment by directly using body movements, and a user can interact with contents in an immersive manner without operating any control equipment. For example, when you stand in front of a TV set, if somatosensory equipment can detect your hand movements, you can control fast forward, backspace, pause, termination and other functions of a television program by upward, downward, leftward and rightward waving actions of a palm; and if the above actions directly correspond to the reactions of game roles, the user can get immersive game experience.

The existing somatosensory manipulation generally obtains a depth image in front of a camera in a laser reflection manner to identify the palm of the user, and reads how many pixels of the palm moving in the image to judge a gesture. The existing technical solutions have the shortcomings that: when the user is not right ahead of the camera (i.e., an included angle of a vertical plane formed by the position of the user and the camera with a television plane is an acute angle), a movement component parallel to the camera (or the television plane) will be identified from a movement in which the palm is vertical to the camera (or the television plane) by mistake, so that the problem that an operation event cannot be accurately identified to cause wrong operation occurs.

## SUMMARY

The present disclosure provides an operation event identification method, for solving the problem that existing somatosensory manipulation equipment cannot accurately judge body movement conditions.

The present disclosure further provides an operation event identification device and a smart terminal, for guaranteeing the practical application of the above method.

To solve the above problems, the present disclosure discloses an operation event identification method, including: obtaining position information of a start sampling point and an end sampling point of a movement of a target object in the space; obtaining correction position information of the end sampling point according to a projection point of the end sampling point on a connecting line of the start sampling point and a coordinate center; and identifying an operation event of the target object according to the position information of the start sampling point and the correction position information of the end sampling point.

Preferably, the position information is point coordinate information of the target object in a coordinate system.

Preferably, the obtaining correction position information of the end sampling point according to a projection point of the end sampling point on a connecting line of the start sampling point and a coordinate center includes: with the coordinate center as a spherical center and a distance between the end sampling point and the coordinate center as a radius, creating a spherical surface; using an intersection of the spherical surface with the connecting line of the start sampling point and the coordinate center as the projection point of the end sampling point on the connecting line of the start sampling point and the coordinate center; and obtaining the correction position information of the end sampling point according to the position information of the start sampling point, the position information of the end sampling point and a spherical surface coordinate.

Preferably, the operation event identification method further includes: calculating a vector between the start sampling point and a correction position according to the position information of the start sampling point and the correction position information of the end sampling point of the target object, and identifying the operation event of the target object according to the vector.

Preferably, the operation event identification method further includes: using the current end sampling point as a new start sampling point, using a moved end position as a new end sampling point, and repeatedly executing the above processes of obtaining the end sampling point and determining the correction position thereof.

According to another preferred embodiment of the present disclosure, an operation event identification device is further disclosed, including: a position information obtaining unit used for obtaining position information of a start sampling point and an end sampling point of a movement of a target object in the space; a correction position determining unit used for obtaining correction position information of the end sampling point according to a projection point of the end sampling point on a connecting line of the start sampling point and a coordinate center; and an operation event identification unit used for identifying an operation event of the target object according to the position information of the start sampling point and the correction position information of the end sampling point.

Preferably, the position information is a point coordinate value of the target object in a coordinate system.

Preferably, the correction position determining unit obtains the correction position information of the end sampling point in the following manner: with the coordinate center as a spherical center and a distance between the end sampling point and the coordinate center as a radius, creating a spherical surface; using an intersection of the spherical surface with the connecting line of the start sampling point and the coordinate center as the projection point of the end sampling point on the connecting line of the start sampling point and the coordinate center; and obtaining the correction position information of the end sampling point according to the position information of the start sampling point, the position information of the end sampling point and a spherical surface coordinate.

Preferably, the operation event identification device further includes: a calculating unit used for calculating a vector between the start sampling point and a correction position according to the position information of the start sampling point and the correction position information of the end sampling point of the target object, and identifying the operation event of the target object according to the vector; and/or a circular scheduling unit used for using the current end sampling point as a new start sampling point, using a moved end position as a new end sampling point, and scheduling the position information obtaining unit, the correction position determining unit and the operation event identification unit to repeatedly execute the processes of obtaining the end sampling point, determining the correction position and identifying the operation event.

In addition, the present disclosure further discloses a smart terminal, including the operation event identification device and a monitor arranged on the smart terminal.

Compared with the prior art, the present disclosure has the following advantages:

in the preferred embodiments of the present disclosure, the projection point of the end sampling point of the target object on the connecting line of the start sampling point and the coordinate center is used as the correction position of the end sampling point, so that the correction position and an initial position of the end sampling point are on the same included angle plane, accordingly, no matter the target object is located at a position of any angle in front of the coordinate center (can be a somatosensory camera in the preferred embodiments of the present application), the components before and after movement of the target object have the same proportions, accurate manipulation can be achieved based on the adjusted correction position, and the problem in the prior art that when the target object is in front of the somatosensory camera, a movement component parallel to the somatosensory camera will be identified from a movement of the target object vertical to the somatosensory camera by mistake is solved.

**BRIEF DESCRIPTION OF THE DRAWINGS**

Fig. 1 is a flowchart of a first embodiment of an operation event identification method in the present disclosure;
Fig. 2 is a flowchart of a second embodiment of an operation event identification method in the present disclosure;
Fig. 3 is a structural schematic diagram of an embodiment of an operation event identification device in the present disclosure;
Fig. 4 is a schematic diagram of a positional relationship of a start sampling point A and an end sampling point B in a spherical surface coordinate system in the method embodiment as shown in Fig. 1;
Fig. 5 is a schematic diagram of a positional relationship of the start sampling point A and the end sampling point B in a three-dimensional coordinate system in the method embodiment as shown in Fig. 1.

**DESCRIPTION OF THE EMBODIMENTS**

In order that the above objects, features and advantages of the present disclosure can be more obvious and understandable, the present disclosure will be further illustrated below in detail in combination with the accompanying drawings and specific embodiments.

The present disclosure provides an operation event identification method, applied to a smart terminal, such as a smart television, etc. The smart terminal is connected with a monitor for obtaining sampling point position information of an identification object, the monitor can be any instrument capable of identifying three-dimensional data in a three-dimensional space in the prior art, for example, a somatosensory camera, and can also be a spatial positioning sensor, for example, an infrared camera, for identifying the position information of the identification object. The monitor can be connected with the smart terminal by USB and can also be installed on the smart terminal. After capturing the identification object, the monitor can identify the identification object by collecting image data of the identification object, analyze the position information of the identification object and send the position information to the smart terminal; the monitor can also directly send the collected image data to the smart terminal, and the smart terminal identifies the image data to obtain the position information of the identification object; and the position information of the identification object can also be obtained by an infrared detector and a laser range finder of the spatial positioning sensor.

To better reflect the position of the identification object, a coordinate system is established at the position of the monitor in the present disclosure.

In the present disclosure, the position information can also be obtained by identifying the identification object in an image by adopting an existing image identification algorithm, for example, point information of the target object in the coordinate system is obtained by adopting kinect, PrimeSense and tof methods, and this will not be repeated redundantly herein. Specifically, the identification object can be a hand, a head or other limbs, and even a specific operation device, such as a joystick, a sensing glove, etc.

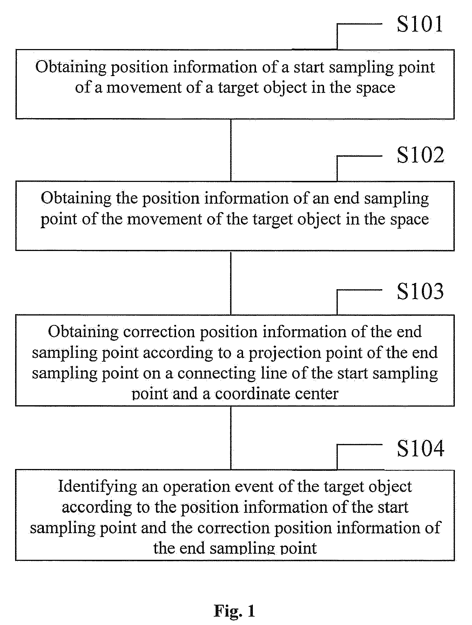

Referring to Fig. 1, it shows a flowchart of a first embodiment of an operation event identification method in the present disclosure. The preferred method embodiment includes the following steps:

step S101: position information of a start sampling point of a movement of a target object in the space is obtained;

step S102: the position information of an end sampling point of the movement of the target object in the space is obtained; and

for the convenience of understanding and illustration, somatosensory manipulation of the smart television is taken as an example for illustration. Somatosensory manipulation equipment can include a somatosensory camera which is arranged on a smart television shell and is connected with the smart television, a specific operation event can be an incidence relation with a television operation, which is established according to the movement of a certain body position (i.e., the target object mentioned above, for example, a palm), for example, front, back, left and right movements of a game role can be controlled by upward, downward, leftward and rightward waving actions of the palm to enable a user to get immersive game experience.

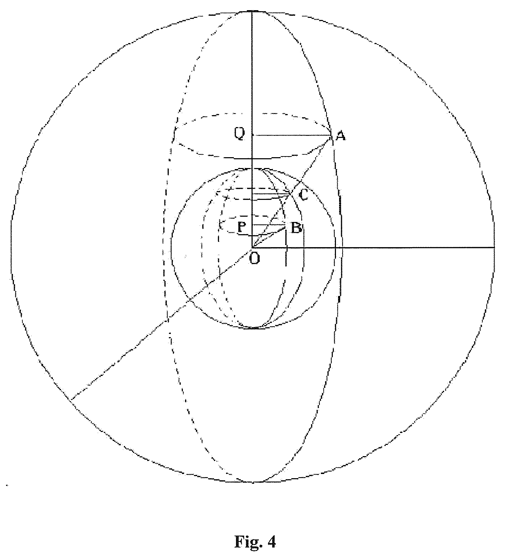

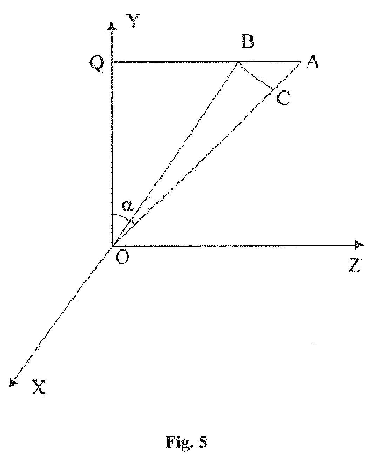

With regard to the start sampling point A and the end sampling point B of the movement of the target object in the space, the position information thereof can be obtained with reference to a spherical surface coordinate system established in Fig. 4. The somatosensory camera is used as a spherical center O of the spherical surface coordinate system, the position information of the start sampling point A can include a horizontal distance $H_a$ (on a horizontal plane passing by the point A and on a section of a sphere with O as the spherical center, in a concentric circle with the center Q of the section as a circle center, a radius of a circle whose circumference passes by the point A, namely, the length of a line segment AQ) and a vertical distance $V_a$ (a distance from the point O to the section, namely, the length of a line segment OQ) of A and O obtained by the somatosensory camera; the position information of the end sampling point B can include a horizontal distance $H_b$ (namely, the length of a line segment BP) and a vertical distance $V_b$ (namely, the length of a line segment OP) of B and O obtained by the somatosensory camera. However, the manner of obtaining the spatial position information of the sampling points in the preferred embodiment is not limited, and other manners can also be adopted, for example, with reference to Fig. 5, in a three-dimensional coordinate system with the somatosensory camera O as an original point, a horizontal plane passing by the point O as an XOZ plane, a vertical plane passing by the start sampling point A and O as a YOZ plane (namely, a connecting line of a vertical projection point of A on the XOZ plane and O is a Z axis), and a vertical plane passing by the point O and vertical to the XOZ plane and the YOZ plane as an XOY plane, three-dimensional point coordinates of A and B are determined according to the horizontal distances and the vertical distances from the start sampling point A and the end sampling point B to the somatosensory camera O, which are obtained by the somatosensory camera.

Step S103: correction position information of the end sampling point is obtained according to a projection point of the end sampling point on a connecting line of the start sampling point and a coordinate center; and in the preferred embodiment, the projection point of the end sampling point on the connecting line of the start sampling point and the coordinate center is an intersection of the connecting line (or an extension line of the connecting line) of the start sampling point and the coordinate center (e.g., a spatial position where the somatosensory camera is located) with a spherical surface using the coordinate center as a spherical center and using a linear distance between the spherical center and the end sampling point as a radius. However, this is not limited in the present disclosure, and the projection point can also be obtained in other manners.

With the three-dimensional coordinate system shown in Fig. 5 as an example, three-dimensional point coordinate information of C can be calculated according to the three-dimensional point coordinate information of A and B. In the embodiment as shown in Fig. 5, to simplify the calculation, it is assumed that the point B is located on the connecting line of AQ. Since A, B and C are all located on the YOZ plane, X coordinate values of the three points are 0;

for the start sampling point A, OQ (namely, a Y coordinate value of the point A) and QA (namely, a Z coordinate value of the point A) can be read according to the somatosensory camera, the points O, Q and A form a right triangle, and OA and an included angle $\alpha$ of OA and OQ can be calculated;

wherein: $OA=(OQ^2+QA^2)^{1/2}$; $\sin\alpha=QA/OA$;

for the end sampling point B, OQ (namely, the Y coordinate value of the point B) and QB (namely, the Z coordinate value of the point B) can be read according to the somatosensory camera, and OB is calculated;

wherein: $OB=(OQ^2+QB^2)^{1/2}$;

the correction position C of B is the projection of the point B on OA, OB is as long as OC (OBC form an isosceles triangle), and OC (OC=OB) can be calculated; and the Y coordinate value $Y_c$ and the Z coordinate value Zc of the C point can be calculated according to the calculated included angle α of OA and OQ,
wherein:

$$Y_C = OC*\cos\alpha; \quad Z_C = OC*\sin\alpha.$$

With the spherical surface coordinate system shown in Fig. 4 as an example, the position information of the correction position C (i.e., the projection point of B on OA) of the end sampling point B includes: a horizontal distance He and a vertical distance $V_c$ of C and O.
He and $V_c$ can be calculated by the following formula:

$$V_C = D_C*\cos\alpha; \quad H_C = D_C*\sin\alpha;$$

$$D_C = D_B = (H_B{}^2 + V_B{}^2)^{1/2};$$

$$\tan\alpha = H_A/V_A$$

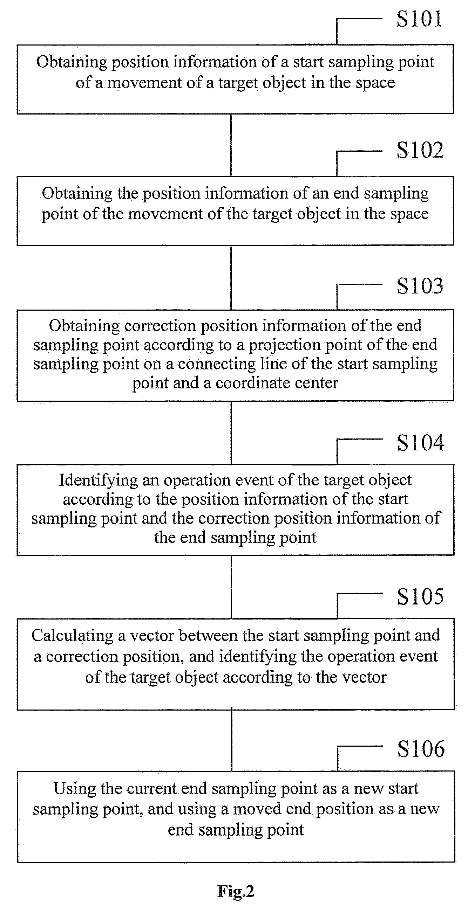

in the above formulas, $D_B$ expresses a linear distance of B and O, $D_C$ expresses a linear distance of C and O, and α expresses the included angle of the connecting line of A and O in the spherical surface coordinate system and a vertical line vertical to the horizontal plane after passing by the point O.
Step S104: an operation event of the target object is identified according to the position information of the start sampling point and the correction position information of the end sampling point.
In the preferred embodiment of the present disclosure, the projection point of the end sampling point of the target object on the connecting line of the start sampling point and the coordinate center is used as the correction position of the end sampling point, so that the correction position and an initial position of the end sampling point are on the same included angle plane, accordingly, no matter the target object is located at a position of any angle in front of the coordinate center (for example, the somatosensory camera can be used as the coordinate center), the components before and after movement of the target object have the same proportions, so that accurate manipulation can be achieved based on the adjusted correction position, and the problem in the prior art that when the target object is in front of the somatosensory camera, a movement component parallel to the somatosensory camera will be identified from a movement of the target object vertical to the somatosensory camera by mistake is solved.
Referring to Fig. 2, it shows a flowchart of a second embodiment of an operation event identification method in the present disclosure, the difference from the first method embodiment lies in that, after determining the correction position of the end position, it further includes a step of further judging a movement trend of the target object, and with the movement of a human palm as an example, a gesture can be judged according to the start sampling point and the correction position of the end sampling point; and in addition, for a subsequent palm action, corresponding processing is circularly carried out according to the same correction method. Specifically, the method embodiment includes the following steps:

step S101: obtaining position information of a start sampling point of a movement of a target object in the space;
step S102: obtaining the position information of an end sampling point of the movement of the target object in the space;
step S103: obtaining correction position information of the end sampling point according to a projection point of the end sampling point on a connecting line of the start sampling point and a coordinate center;
step S104: identifying an operation event of the target object according to the position information of the start sampling point and the correction position information of the end sampling point;
step S105: calculating a vector between the start sampling point and a correction position according to the position information of the start sampling point and the correction position information of the end sampling point of the target object, and identifying the operation event of the target object according to the vector; and
. step S106: using the current end sampling point as a new start sampling point, and using a moved end position as a new end sampling point; and then turning to the step S102 to repeatedly execute the above processes of obtaining the position information of the end sampling point, determining the correction position information of the end sampling point and judging the movement trend of the target object, etc.

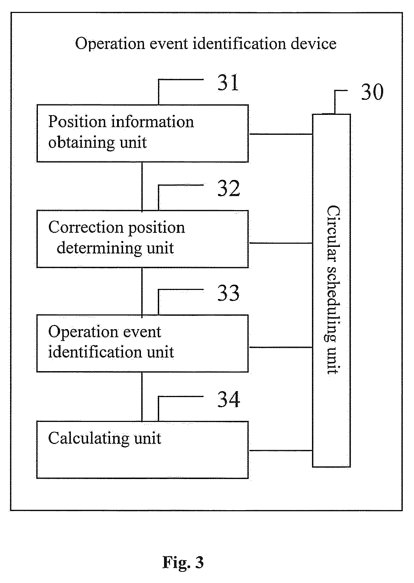

With regard to the foregoing method embodiments, for the simplicity of description, the method embodiments are expressed as a series of combined actions, but those skilled in the art should be aware that the present disclosure is not limited by the described action sequence, because according to the present disclosure, some steps may be executed in other sequences or at the same time; and secondly, those skilled in the art should also be aware that all the method embodiments belong to preferred embodiments, and the actions and modules involved are not necessarily essential to the present disclosure.
Referring to Fig. 3, it shows a structure block diagram of an embodiment of an operation event identification device in the present disclosure, including:

a position information obtaining unit 31 used for obtaining position information of a start sampling point and an end sampling point of a movement of a target object in the space;

a correction position determining unit 32 used for obtaining correction position information of the end sampling point according to a projection point of the end sampling point on a connecting line of the start sampling point and a coordinate center; and

an operation event identification unit 33 used for identifying an operation event of the target object according to the position information of the start sampling point and the correction position information of the end sampling point.

In a further preferred embodiment of the above device embodiment, the operation event identification device further includes:

a calculating unit 34 used for calculating a vector between the start sampling point and a correction position according to the position information of the start sampling point and the correction position information of the end sampling point of the target object, and identifying the operation event of the target object according to the vector; and

a circular scheduling unit 30 used for using the current end sampling point as a new start sampling point, using a moved end position as a new end sampling point, and scheduling the position information obtaining unit 31, the correction position determining unit 32 and the operation event identification unit 33 to repeatedly execute the processes of obtaining the end sampling point, determining the correction position and identifying the operation event; and the circular scheduling unit can further schedule a movement trend judging unit 34 to judge a continuous movement trend of the target object.

In another further preferred embodiment, the position information is a point coordinate value of the target object in a spherical surface coordinate system. The correction position determining unit 32 specifically determines the projection point of the end sampling point on the connecting line of the start sampling point and the coordinate center in the following manner: using an intersection of the connecting line (or an extension line of the connecting line) of the start sampling point and a somatosensory camera with a spherical surface using the somatosensory camera as a spherical center and using a linear distance between the spherical center and the end sampling point as a radius, as the projection point of the end sampling point on the connecting line of the start sampling point and the coordinate center.

With the start sampling point A and the end sampling point B in the spherical surface coordinate system with the somatosensory camera as the spherical center as shown in Fig. 4, and the position information of a correction position C of the end sampling point as an example:

ple:

. the position information of the start sampling point A can be determined by a horizontal distance $H_a$ (namely, the length of a line segment AQ) and a vertical distance $V_a$ (namely, the length of a line segment OQ) of A and the somatosensory camera O obtained by the somatosensory camera; the position information of the end sampling point B can be determined by a horizontal distance $H_b$ (namely, the length of a line segment BP) and a vertical distance $V_b$ (namely, the length of a line segment OP) of B and O obtained by the somatosensory camera;

. the position information of the correction position C of the end sampling point B includes a horizontal distance $H_c$ and vertical distance $V_c$ of C and O and is specifically calculated by the correction position determining unit 32 through the following formula:

$$V_C = D_C * \cos\alpha; \quad H_C = D_C * \sin\alpha;$$

$$D_C = D_B = (H_B^2 + V_B^2)^{1/2};$$

$$\tan\alpha = H_A / V_A$$

. in the above formulas, $D_B$ expresses a linear distance of B and O, $D_C$ expresses a linear distance of C and O, and $\alpha$ expresses the included angle of the connecting line of A and O in the spherical surface coordinate system and a vertical line vertical to the horizontal plane after passing by the point O.

In addition, the present disclosure further discloses a smart terminal, including a monitor which is arranged on the smart terminal and can obtain the position information of the target object, and the operation event identification device capable of correcting the position information of the target object obtained by the monitor.

The present disclosure further discloses an operation event identification device, comprising: a processor; and a memory for storing instructions executable by the processor; wherein the processor is configured to perform the following steps: obtaining position information of a start sampling point and an end sampling point of a movement of a target object in the space; obtaining correction position information of the end sampling point according to a projection point of the end sampling point on a connecting line of the start sampling point and a coordinate center; and identifying an operation event of the target object according to the position information of the start sampling point and the correction position information of the end sampling point.

Preferably, the position information is a point coordinate value of the target object in a coordinate system.

Preferably, the processor is further configured to perform the following steps: obtaining the correction position information of the end sampling point in the following manner: with the coordinate center as a spherical center and a distance between the end sampling point and the coordinate center as a radius, creating a spherical surface; using an intersection of the spherical surface with the connecting line of the start sampling point and the coordinate center as the projection point of the end sampling point on the connecting line of the start sampling point and the coordinate center; and obtaining the correction position information of the end sampling point according to the position information of the start sampling point, the position information of the end sampling point and a spherical surface coordinate.

Preferably, the processor is further configured to perform the following steps: calculating a vector between the start sampling point and a correction position according to the position information of the start sampling point and the correction position information of the end sampling point of the target object, and identifying the operation event of the target object according to the vector; and/or, using the current end sampling point as a new start sampling point, using a moved end position as a new end sampling point, and scheduling the position information obtaining unit, the correction position determining unit and the operation event identification unit to repeatedly execute the processes of obtaining the end sampling point, determining the correction position and identifying the operation event.

The present disclosure further discloses a Non-volatile computer storage medium, one or more modules stored in the computer storage medium, a device is configured to perform the following operations when the one or more modules being executed by the device: obtaining position information of a start sampling point and an end sampling point of a movement of a target object in the space; obtaining correction position information of the end sampling point according to a projection point of the end sampling point on a connecting line of the start sampling point and a coordinate center; and identifying an operation event of the target object according to the position information of the start sampling point and the correction position information of the end sampling point.

It should be noted that the above device or system embodiments belong to preferred embodiments, and the units and modules involved are not necessarily essential to the present disclosure.

The embodiments in the description are described in a progressive manner, what is highlighted in each embodiment is difference from other embodiments, and for the identical or similar parts between the embodiments, reference can be made to each other. For the device embodiments of the present disclosure, they are basically similar to the method embodiments, and thus described simply, and for related parts, reference can be made to part of illustrations of the method embodiments.

The operation event identification method and device and the smart terminal provided by the present disclosure have been illustrated above in detail, specific examples are used herein to illustrate the principle and embodiments of the present disclosure, and the illustrations of the above embodiments are merely used for helping to understand the method of the present disclosure and the core thought thereof; and meanwhile, those of ordinary skill in the art will make variations on the specific embodiments and the application range according to the thought of the present disclosure, and in summary, the contents in the description should not be construed as limiting the present disclosure.

**Claims**

1. An operation event identification method, comprising:

   obtaining position information of a start sampling point and an end sampling point of a movement of a target object in the space;
   obtaining correction position information of the end sampling point according to a projection point of the end sampling point on a connecting line of the start sampling point and a coordinate center; and
   identifying an operation event of the target object according to the position information of the start sampling point and the correction position information of the end sampling point.

2. The operation event identification method of claim 1, wherein the position information is point coordinate information of the target object in a coordinate system.

3. The operation event identification method of claim 2, wherein the obtaining correction position information of the end sampling point according to a projection point of the end sampling point on a connecting line of the start sampling point and a coordinate center comprises:

   with the coordinate center as a spherical center and a distance between the end sampling point and the coordinate center as a radius, creating a spherical surface;
   using an intersection of the spherical surface with the connecting line of the start sampling point and the coordinate center as the projection point of the end sampling point on the connecting line of the start sampling point and the coordinate center; and
   obtaining the correction position information of the end sampling point according to the position information of the start sampling point, the position information of the end sampling point and a spherical surface coordinate.

4. The operation event identification method of claim 1, further comprising:

calculating a vector between the start sampling point and a correction position according to the position information of the start sampling point and the correction position information of the end sampling point of the target object, and identifying the operation event of the target object according to the vector.

5. The operation event identification method of claim 1, further comprising: using the current end sampling point as a new start sampling point, using a moved end position as a new end sampling point, and repeatedly executing the above processes of obtaining the end sampling point and determining the correction position thereof.

6. An operation event identification device, comprising:

one or more processors;
a memory; and
one or more modules stored in the memory, the one or more modules are configured to perform the following operations when being executed by the one or more processors
obtaining position information of a start sampling point and an end sampling point of a movement of a target object in the space;
obtaining correction position information of the end sampling point according to a projection point of the end sampling point on a connecting line of the start sampling point and a coordinate center; and
identifying an operation event of the target object according to the position information of the start sampling point and the correction position information of the end sampling point.

7. The operation event identification device of claim 6, wherein the position information is a point coordinate value of the target object in a coordinate system.

8. The operation event identification device of claim 7, wherein the processor is further configured to perform the following steps:

obtaining the correction position information of the end sampling point in the following manner:

with the coordinate center as a spherical center and a distance between the end sampling point and the coordinate center as a radius, creating a spherical surface;
using an intersection of the spherical surface with the connecting line of the start sampling point and the coordinate center as the projection point of the end sampling point on the connecting line of the start sampling point and the coordinate center; and
obtaining the correction position information of the end sampling point according to the position information of the start sampling point, the position information of the end sampling point and a spherical surface coordinate.

9. The operation event identification device of claim 6, wherein the processor is further configured to perform the following steps: calculating a vector between the start sampling point and a correction position according to the position information of the start sampling point and the correction position information of the end sampling point of the target object, and identifying the operation event of the target object according to the vector; and/or,
using the current end sampling point as a new start sampling point, using a moved end position as a new end sampling point, and scheduling the position information obtaining unit, the correction position determining unit and the operation event identification unit to repeatedly execute the processes of obtaining the end sampling point, determining the correction position and identifying the operation event.

10. A smart terminal, comprising a monitor arranged on the smart terminal, wherein the smart terminal further comprises the operation event identification device of any one of claims 6-9.

11. A Non-volatile computer storage medium, one or more modules stored in the computer storage medium, a device is configured to perform the following operations when the one or more modules being executed by the device:

obtaining position information of a start sampling point and an end sampling point of a movement of a target object in the space;
obtaining correction position information of the end sampling point according to a projection point of the end sampling point on a connecting line of the start sampling point and a coordinate center; and
identifying an operation event of the target object according to the position information of the start sampling point and the correction position information of the end sampling point.

S101

Obtaining position information of a start sampling point
of a movement of a target object in the space

S102

Obtaining the position information of an end sampling
point of the movement of the target object in the space

S103

Obtaining correction position information of the end
sampling point according to a projection point of the end
sampling point on a connecting line of the start sampling
point and a coordinate center

S104

Identifying an operation event of the target object
according to the position information of the start
sampling point and the correction position information of
the end sampling point

Fig. 1

S101

Obtaining position information of a start sampling point of a movement of a target object in the space

S102

Obtaining the position information of an end sampling point of the movement of the target object in the space

S103

Obtaining correction position information of the end sampling point according to a projection point of the end sampling point on a connecting line of the start sampling point and a coordinate center

S104

Identifying an operation event of the target object according to the position information of the start sampling point and the correction position information of the end sampling point

S105

Calculating a vector between the start sampling point and a correction position, and identifying the operation event of the target object according to the vector

S106

Using the current end sampling point as a new start sampling point, and using a moved end position as a new end sampling point

Fig.2

Operation event identification device

┌─── 31

Position information
obtaining unit

┌─── 32

Correction position
determining unit

┌─── 33

Operation event
identification unit

┌─── 34

Calculating unit

┌─ 30

Circular scheduling unit

Fig. 3

Fig. 4

Fig. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/327099 A1 (VOJAK WILLIAM JOHN [US]) 27 December 2012 (2012-12-27)<br>* abstract *<br>* figures 1-4, 6A-6C, 10A-10C *<br>* paragraph [0022] - paragraph [0026] *<br>* paragraph [0029] - paragraph [0030] *<br>* paragraph [0037] - paragraph [0038] *<br>----- | 1-11 | INV.<br>G06F3/03<br>G06F3/01<br>G06T7/20 |
| X | US 2003/234799 A1 (LEE BEOM-SEOK [KR]) 25 December 2003 (2003-12-25)<br>* abstract *<br>* paragraph [0028] - paragraph [0044] *<br>* figures 1-6 *<br>----- | 1-11 | |
| X | US 2014/118255 A1 (BILLERBECK BRYED [US]) 1 May 2014 (2014-05-01)<br>* abstract *<br>* paragraph [0032] - paragraph [0057] *<br>* figures 1-6 *<br>----- | 1-11 | |
| | | | **TECHNICAL FIELDS SEARCHED (IPC)**<br><br>G06F<br>G06K<br>G06T |

The present search report has been drawn up for all claims

| Place of search | Date of completion of the search | Examiner |
|---|---|---|
| The Hague | 28 July 2016 | Papadakis, Georgios |

EPO FORM 1503 03.82 (P04C01)

## ANNEX TO THE EUROPEAN SEARCH REPORT
## ON EUROPEAN PATENT APPLICATION NO.

EP 16 16 3256

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2016

| Patent document cited in search report | Publication date | Patent family member(s) | Publication date |
|---|---|---|---|
| US 2012327099 A1 | 27-12-2012 | NONE | |
| US 2003234799 A1 | 25-12-2003 | KR 20030097310 A<br>US 2003234799 A1 | 31-12-2003<br>25-12-2003 |
| US 2014118255 A1 | 01-05-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510149384